(19) Europäisches Patentamt / European Patent Office / Office européen des brevets

(11) **EP 2 585 517 B1**

(12) **EUROPEAN PATENT SPECIFICATION**

(45) Date of publication and mention
of the grant of the patent:
**24.12.2014 Bulletin 2014/52**

(51) Int Cl.:
*C08K 3/00* (2006.01)       *C08K 3/04* (2006.01)
*H01B 3/00* (2006.01)

(21) Application number: **11727475.3**

(22) Date of filing: **27.06.2011**

(86) International application number:
**PCT/EP2011/060714**

(87) International publication number:
**WO 2012/000935 (05.01.2012 Gazette 2012/01)**

(54) **THERMALLY CONDUCTIVE POLYMER COMPOSITION**

WÄRMELEITENDE POLYMERZUSAMMENSETZUNG

COMPOSITION DE POLYMÈRE THERMOCONDUCTRICE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2010 EP 10167465**

(43) Date of publication of application:
**01.05.2013 Bulletin 2013/18**

(73) Proprietor: **DSM IP Assets B.V.**
**6411 TE Heerlen (NL)**

(72) Inventors:
• **JANSSEN, Robert Hendrik Catharina**
**NL-6191 PC Beek (NL)**
• **DIJK, VAN, Hans Klaas**
**NL-6133VA Sittard (NL)**
• **FEIJTS, Pascal Jozef Maria**
**NL-6042 JD Roermond (NL)**
• **WENNEKES, Johannes Albertus**
**CH 2564 Bellmund (CH)**

(74) Representative: **van der Ploeg, Antonius
Franciscus M.J. et al
DSM Intellectual Property
Urmond Office
P.O. Box 4
6100 AA Echt (NL)**

(56) References cited:
**WO-A1-2007/149783       WO-A1-2009/019186
WO-A2-2005/006403       WO-A2-2007/090166**

• **HAN S ET AL: "Enhancing the thermal
conductivity and compressive modulus of
carbon fiber polymer-matrix composites in the
through-thickness direction by nanostructuring
the interlaminar interface with carbon black",
CARBON, ELSEVIER, OXFORD, GB LNKD- DOI:
10.1016/J.CARBON.2008.03.023, vol. 46, no. 7, 1
June 2008 (2008-06-01), pages 1060-1071,
XP022669874, ISSN: 0008-6223 [retrieved on
2008-04-06]**
• **SINITSKII V V ET AL: "HEAT CONDUCTIVITY OF
COMPOSITES BASED ON LOW-DENSITY
POLYETHYLENE AND CARBON BLACK",
INTERNATIONAL POLYMER SCIENCE AND
TECHNOLOGY, RAPRA TECHNOLOGY,
SHREWABURY, GB, vol. 19, no. 8, 1 January 1992
(1992-01-01), pages T/65-T/67, XP000324907,
ISSN: 0307-174X**
• **OKAMOTO T ET AL: "Dielectric property of
composites made with polyethylene, boron
nitride and carbon black", 2002 ANNUAL
REPORT CONFERENCE ON ELECTRICAL
INSULATION AND DIELECTRIC PHENOMENA.
( CEIDP ). CANCUN, QUINTANA ROO, MEXICO,
OCT. 20-24, 2002; [ANNUAL REPORT
CONFERENCE ON ELECTRICAL INSULATION
AND DIELECTRIC PHENOMENA], NEW YORK,
NY : IEEE, US LNKD- DO, 20 October 2002
(2002-10-20), pages 574-577, XP010615378, ISBN:
978-0-7803-7502-4**

**Description**

The present invention relates to a thermally conductive polymer composition, and more particular to thermally conductive polymer compositions with electrically insulating properties.

Thermally conductive polymer compositions are used in applications requiring good heat management properties, such as heat sinks and constructive elements in electrical and electronic assemblies, lamps, engines and other products comprising a heat source. Such applications require dissipation of the heat from the heat source and a good heat management system to provide good functioning of the electrical and electronic components or of the engines. Heat can also destroy material properties. Prolonged heat degrades polymers. Thermal expansion and contraction leads to warping, distortion, and even part failure. Reducing the temperature swing reduces these problems. Reducing the heat helps to improve longevity and also cooler materials retain material properties better.

Thermally conductive polymer compositions typically comprise an organic polymer and thermally conductive filler dispersed therein. For many of such heat management applications thermoplastic polymers which can withstand high temperatures are used, such a polyamides, polyphenylene sulphides, polyphenylene oxides, polysulfones, polyarylates, polyetheretherketones, and polyetherimides,.

To achieve a high thermal conductivity, generally a high loading of thermally conductive filler is required. This can lead to problems in the processing of the polymer composition.

Furthermore, high thermal conductivity is often achieved with thermally conductive fillers that have a high thermal conductivity, but also a high electrical conductivity. If such components are used in higher amounts for achieving an even higher thermal conductivity for the composition and parts produced thereof, the resulting parts also become electrically conductive. If the thermally conductive polymer composition has to be an electrical insulator, the use of electrically conductive fillers has to be limited or excluded at all and to be replaced by electrically insulating fillers, often by even larger amounts because of less intrinsic thermal conductivity, to achieve the same or comparable level of thermal conductivity for the composition.

Patent application WO-A-2008/079438 describes thermally conductive and electrically resistive polymer compositions comprising an organic polymer and thermally conductive filler. The thermally conductive filler consists of a mixture of boron nitride and graphite. Graphite has a high thermal conductivity but is also electrically conductive. Boron nitride is a highly preferred thermally conductive filler, as it has a relatively high intrinsic thermal conductivity and it is electrically isolating. However, it is a rather expensive material. For achieving compositions with good thermal properties in combination with electrical insulating properties, the compositions in US2008/0153959 are still very high in total filler content, several of which with relative large amounts of boron nitride, which are either expensive and/or critical in flow.

It is therefore desirable to find further thermally conductive polymer compositions with an improved heat management performance and/or an improved performance balance in terms of heat management, processing, electrical insulation, mechanical properties and flow.

Disclosed herein is a thermally conductive polymer composition, which comprises, next to the organic polymer and the thermally conductive filler, carbon black. The organic polymer is a thermoplastic polymer chosen from the group consisting of polyesters, polyamides, polyphenylene sulphides, polyphenylene oxides, polysulfones, polyarylates, polyetheretherketones, and polyetherimides, and mixtures and/or copolymers thereof. As a thermally conductive filler the composition comprises 15-40 wt.% boron nitride, relative to the total weight of the composition. The amount of carbon black is in the range of 0.01 - 10 wt.%, relative to the total weight of the composition.

The effect of the presence of the carbon black in the polymer composition according to the invention is a better heat management performance, compared to corresponding thermally conductive compositions comprising boron nitride, but no carbon black, while meanwhile the composition has good processing and flow properties. Furthermore, the carbon black in the thermally conductive polymer composition according to the invention limits the need of high amounts of thermally conductive filler, thereby providing the thermally conductive polymer composition with better electrically insulating properties.

The thermally conductive polymer composition surprisingly shows a better overall performance balance in heat management properties in heat management applications at elevated temperature and flow properties during processing. This result is achieved despite the fact that the thermal conductivity of the polymer composition at room temperature is hardly improved, if any, and in some cases might even be deteriorated to some extent, by the presence of the carbon black. Moreover, the observed effect can be significant and is surprisingly large in view of the small amount of carbon black needed to achieve the effect, in particular when compared to the relative large amounts of thermally conductive filler generally needed to raise the thermally conductivity.

In a typical example the polymer composition comprising both boron nitride and carbon black showed about twice as large a drop in temperature compared to the effect of a corresponding polymer composition comprising only the boron nitride in the same amount. In contrast to that, the effect of a corresponding polymer composition comprising only the carbon black in the same amount was negligible compared to both of the above two compositions.

Patent application WO-A-2008/079438, mentioned above, describes a comparative example wherein the polymer composition comprises a polyamide (an organic polymer), 45 wt.% boron nitride (a thermally conductive filler) and 10.3 wt.% carbon black. It is mentioned in WO-A-2008/079438 that carbon black, among other components, did not exhibit an enhanced thermal conductivity. The use of carbon black actually decreased the thermal conductivity. Moreover, the composition was too viscous to make a determination of the melt flow index. There is no indication in WO-A-2008/079438 that carbon black could have such a positive effect on the heat management in thermally conductive polymer compositions, as observed in the present invention.

The use of the term "a" and "an" and "the" and similar references used in the context of describing the invention (especially in the context of the claims) are to be construed to cover both the singular and the plural, unless otherwise indicated herein or clearly contradicted by the text.

Where in the present disclosure a range is defined with a minimum number or maximum number, or both, as for example in the range of 20 - 90 weight percent (wt.%), the range is inclusive the stated value or values and has the meaning dictated by the context, e.g. it includes the degree of error associated with measurement of the particular value. All ranges disclosed herein are inclusive the endpoints, and the endpoints are independently combinable with each other.

The organic polymer used in the thermally conductive polymer composition according to the invention is a thermoplastic polymer is chosen from the group consisting of polyamides, polyesters, polyphenylene sulphides, polyphenylene oxides, polysulfones, polyarylates, polyimides, polyetheretherketones, and polyetherimides, and mixtures and copolymers thereof. Suitable polyamides include both amorphous and semi-crystalline polyamides. Suitable thermoplastic polyamides are all the polyamides known to a person skilled in the art, comprising semi-crystalline and amorphous polyamides that are melt-processable.

The organic polymer is generally used in an amount in the range of 20 - 90 weight percent (wt.%), of the total weight of the thermally conductive polymer composition. The organic polymer is more particularly used in higher amounts, such as at least 25 wt.%, at least 30 wt.%, or at least 40 wt.%, relative to the total weight of the thermally conductive polymer composition. In particular such higher amounts are possible since less thermally conductive filler is needed to achieve an improved level in heat management performance, and allows for an easier processing. The organic polymer is also more particularly used in amounts, such as at most 80 wt.%, at most 70 wt.%, or at most 60 wt.%, relative to the total weight of the thermally conductive polymer composition. In particular such lower maximum amounts will be used, when the thermally conductive polymer composition comprises a fibrous reinforcing agent next to the thermally conductive filler and the carbon black. In particular where the improvement in heat management performance allows for use of less thermally conductive filler, higher amounts of fibrous reinforcing agent can be used, thereby increasing mechanical properties while retaining good processing properties.

For the thermally conductive filler in the thermally conductive polymer composition at least boron nitride is used. The boron nitride may be any shape of particles that are suitable for being dispersed in the thermoplastic polymer. The boron nitride may be cubic boron nitride, hexagonal boron nitride, amorphous boron nitride, rhombohedral boron nitride, or another allotrope. It may be used as powder, aglomorates or fibres. For example, boron nitride granular particles having an aspect ratio l/d of about 4:1 can be used. But also boron nitride granular particles with smaller, and preferably with a larger l/d ratio are used. Exemplary boron nitrides are PT350, PT360 and PT370, commercially available from General Electrics Advanced materials.

The carbon black used in the present invention any carbon black that can be dispersed as fine particles in the organic polymer. In contrast to graphite, which has a layered micro-crystalline structure of micro-scale structure, e.g. with crystallite lengths (Lc) > 100 nm consisting of parallel layers of hexagonal arranged carbon atoms in planar condensed ring systems, and which can be produced by heat treating non-graphitic carbons to temperatures above 2500°C, carbon black is an amorphous particulate carbon material, or essentially so, apart from nano-scale crystallites, e.g. with Lc of less than 5 nm, which can be produced for example by oxidation of oil.

The amount of carbon black in the composition according to the present invention preferably is at least 0.1 wt.%, and even better at least 1 wt.%, relative to the total weight of the composition, and also preferably at most 7.5 wt.% relative to the total weight of the composition. A higher minimum amount results in better heat management properties, whereas a lower maximum amount results in better flwo and processing properties.

Next to boron nitride and carbon black any material that can be dispersed in the organic polymer and that improves the thermal conductivity of the polymer composition can be used. Typically such a material has an intrinsic thermal conductivity of at least 2.5 W/m·K. A higher intrinsic thermal conductivity is better and suitably the thermal conductivity is at least 5 W/m·K or even better at least 10 W/m·K.

The thermally conductive filler may be in the form of granular powder, particles, whiskers, short fibres, or any other suitable form. The particles can have a variety of structures. For example, the particles can have flake, plate, rice, strand, hexagonal, or spherical-like shapes. The thermally conductive filler suitably is a granular, a plate like or fibrous material, or a combination thereof. A granular material is herein understood to be a material consisting of particles with an aspect ratio of l/d (length/diameter) of less than 10:1. Suitably, the granular material has an aspect ratio of about 5:1 or less. A fibre is herein understood to be a material consisting of particles with an aspect ratio of at least 10:1. More preferably the thermally conductive fibres consist of fibres with an aspect ratio of at least 15:1, more preferably at least 25:1. A plate like material is herein understood a material with a relative small thickness compared to its diameter. Suitably, the platelets have an aspect ratio of t/d of less than 0.5, but this may be much smaller, e.g. 0.2 and even less than 0.1.

For the thermally conductive fibres in the thermally conductive polymer composition any fibres that improve the thermal conductivity of the polymer composition can be used.

Suitable other thermally conductive fillers include, for example, aluminium, alumina, copper, magnesium, brass, carbon, silicon nitride, aluminium nitride, zinc oxide, mica, graphite, ceramic fibre and the like. Mixtures of such thermally conductive fillers are also suitable.

Suitably, the thermally conductive fibres comprise metal fibres and / or carbon fibres. Suitable carbon-fibres, also known as graphite fibres, include PITCH-based carbon fibre and PAN-based carbon fibres. For example, PITCH-based carbon fibre having an aspect ratio of about 50:1 can be used. PITCH-based carbon fibres contribute significantly to the heat conductivity. On the other hand PAN-based carbon fibres have a larger contribution to the mechanical strength.

It is noted that the group of suitable thermally conductive filler generally consists of metallic filler, inorganic thermally conductive components and/or carbonaceous components. It is explicitly noted that in case of a carbonaceous component this can be a graphite type material, or a carbon fibers, or any combination thereof, but has to be anything other than carbon black.

The choice of thermally conductive filler will depend on the further requirements for the polymer composition and application thereof. Also the amounts that have to be used depend on the type of thermally conductive filler and the level of heat management properties required and achievable in combination with the boron nitride and the carbon black.

The polymer composition according to the invention suitably comprises the thermally conductive filler in an amount in the range of 5 -70 wt%, relative to the total weight of the polymer composition.

The thermally conductive filler including the boron nitride is more particularly used in higher amounts, such as at least 20 wt.%, or at least 25 wt.%, relative to the total weight of the thermally conductive polymer composition. In particular such higher minimum amounts are favourable to achieve higher thermally conductive and better heat management performance. The thermally conductive filler including the boron nitride is also more particularly used in limited maximum amounts, such as at most 60 wt.%, at most 50 wt.%, or at most 40 wt.%, relative to the total weight of the thermally conductive polymer composition. In particular such lower maximum amounts can be used, while retaining good heat management properties due to the carbon black in the composition. The lower amounts, while retaining good heat management properties because of the presence of the carbon black, also allows for easier processing. Alternatively, the use of lower amounts of thermally conductive filler can be combined with higher amounts of fibrous reinforcing agent, thereby increasing mechanical properties while retaining good heat management performance due to the carbon black.

In this respect the thermally conductive filler used in the polymer composition according to the invention preferably has an intrinsic thermal conductivity of at least 5 W/m·K, more preferably at least 10 W/m·K, and even better at least 20 W/m.K. With such a higher intrinsic thermal conductivity a lower amount of thermally conductive filler is needed to achieve a particular thermally conductive for the PC. Typical examples are alumina, an amphoteric oxide of aluminium with the chemical formula Al2O3, with an intrinsic thermal conductivity of about 30 W/m·K, and born nitride with an intrinsic thermal conductivity of about 100 W/m·K

The thermal conductivity of a polymer composition is herein understood to be a material property, which can be orientation dependent and which also depends on the history of the composition. For determining the thermal conductivity of a polymer composition, that material has to be shaped into a shape suitable for performing thermal conductivity measurements. Depending on the composition of the polymer composition, the type of shape used for the measurements, the shaping process as well as the conditions applied in the shaping process, the polymer composition may show an isotropic thermal conductivity or an anisotropic, i.e. orientation dependent thermal conductivity. In case the polymer composition is shaped into a flat rectangular shape, the orientation dependent thermal conductivity can generally be described with three parameters: $\Lambda_\perp$, $\Lambda_{//}$ and $\Lambda_\pm$, wherein $\Lambda_\perp$ is the through-plane thermal conductivity, $\Lambda_{//}$ is the in-plane thermal conductivity in the direction of maximum in-plane thermal conductivity, also indicated herein as parallel or longitudinal thermal conductivity and $\Lambda_\pm$ is the in-plane thermal conductivity in the direction of minimum in-plane thermal conductivity. It is noted that the through-plane thermal conductivity is indicated elsewhere also as "transversal" thermal conductivity.

In case of a polymer composition with a dominant parallel orientation of plate-like particles in plane with the planar orientation of the plate, the polymer composition may show an isotropic in-plane thermal conductivity, i.e. $\Lambda_{//}$ is approximately equal to $\Lambda_\pm$.

The through plane thermal conductivity as well as the parallel and in-plane thermal conductivity of the polymer composition according to the invention can vary over a wide range. In case the polymer composition has an isotropic thermal conductivity, the orientationally averaged thermal conductivity being equal to the through plane thermal conductivity, suitably is at least 0.5 W/m.K, while in case the plastic composition has an anisotropic thermal conductivity, the orientationally averaged thermal conductivity can be much higher than the through plane thermal conductivity. Preferably, the orientationally averaged thermal conductivity is at least 1 W/m.K, more preferably at least 2 W/m.K, and still more preferably at least 2.5 W/m.K.

Suitably, the heat-processable thermally conductive polymer composition has an in-plane or parallel thermal conductivity of at least 1 W/m.K. Preferably the plastic composition has an in-plane or parallel thermal conductivity in the range of 2 - 50 W/m·K, preferably 3 - 40 W/m·K, and more preferably 4 - 25 W/m·K. Also suitably, the heat-processable thermally conductive polymer composition according to the present invention has a through-plane thermal conductivity of at least 0.5 W/m.K. Preferably, the plastic composition has a through plane thermal conductivity of at least 0.75 W/m.K, more preferably at least 1 W/m.K or even at least 1.5 W/m.K. Very suitable would be a value around or close to 2 W/m.K. The through plane thermal conductivity may be as high as 3 W/m.K or even higher, but this brings little further improvement in the heat management performance in many applications.

Preferably, the polymer composition has a through plane thermal conductivity in the range 0.5-2.5 W/m.K, more preferably 1.0-2.0 W/m.K.

Herein the thermal conductivity is derived from the thermal diffusivity (D) measured by laser flash technology according to ASTM E1461-01 on injection moulded samples of 80x80x2 mm in through plane respectively in-plane direction, the bulk density (p) and the specific heat (Cp), at 20°C, using the method also described ASTM E1461-01.

In a preferred embodiment of the invention the thermally conductive filler only comprises an electrically insulating thermally conductive filler. An effect of this preferred embodiment comprising the above mentioned carbon black is that the content of fillers which are both thermally conductive and electrically conductive can be kept below a threshold value or even left out such that the composition remains electrically insulating, while still keeping a very good heat management performance. This also allows the use of higher amounts of thermally conductive filler while retaining electrically isolating properties for the thermally conductive polymer composition.

With boron nitride in combination with the carbon black, the thermally conductive polymer composition can be prepared with high thermally conductive, very good heat management properties and good electrically insulating properties.

In a preferred embodiment of the present invention, the polymer composition is a thermally conductive electrically insulating composition.

With an electrically insulating composition is herein understood a composition having a volume resistivity, measured by the method according to ASTM D257, of at least $10^5$ Ohm.m. For the volume electrical resistivity testing, test specimens of 80 x 80 x 2 mm are used. Specimens are conditioned at 23 C and 50% relative humidity for 40 hours before testing.

Preferably, the thermally conductive electrically insulating composition according to the preferred embodiment of the invention has a volume resistivity of at least $10^6$ Ohm.m. Suitably the volume resistivity is in the range of $10^7$ -$10^{16}$ Ohm.m.

Suitable examples of thermally conductive electrically insulating fillers that can be used in the composition according to the invention, next to boron nitride, are, fore example coated metal spheres, aluminum oxide (Al2O3), Aluminum nitride (ALN), silicon carbide (SiC) and diamond. Next to the thermally conductive electrically insulating fillers, the electrically insulating composition may comprise also thermally conductive electrically conductive fillers, provided that the amount thereof is small enough to retain the electrically insulating properties of the composition, i.e. provided that the volume resistivity remains at least $10^5$Ohm.m. The maximum amount of thermally conductive electrically conductive filler allowable can be determined by the skilled person by routing testing. Preferably, the thermally conductive filler used in the present invention consists of boron nitride.

In a particular embodiment of the present invention, the thermally conductive filler comprises a metallic filler, or an inorganic thermally conductive component, or a carbonaceous component other than carbon black, or any combination thereof, and the thermally conductive filler is present in an amount of at least 15 wt.%, more preferably at east 20 wt.%, respectively at most 60 wt.%, or even better at most 40 wt.%, relative to the total weight of the polymer composition, while the carbon black in an amount of at least 0.1 wt.% or even better at least 1. wt.%, respectively at most 7.5 wt.%, relative to the total weight of the polymer composition. Herein the thermally conductive filler comprises the 15-40 wt.% of boron nitride, the wt.% being relative to the total weight of the polymer composition.

The thermally conductive polymer composition according to the invention may comprise, next to the organic polymer, the thermally conductive filler and the carbon black, one or more further additives. The additives that can be used therein can be any auxiliary additive used in polymer compositions. The thermally conductive polymer composition according to the invention may contain additives such as fillers and reinforcing agents that are not thermally conductive, more particular inorganic fillers and/or fibrous reinforcing agents, and other additives including auxiliary additives such as mould release agents, stabilizers, like UV absorbers, antioxidants, and others, lubricants, plasticizers, anti-static agents, non-IR-absorbing pigments, dyes and colorants, blowing agents, flame retardants, impact modifiers, among others, as well as combinations comprising at least one of the foregoing additives.

The non-thermally conductive fillers and reinforcing agents may be present in an amount varying over a wide range. Suitable, the thermally conductive polymer composition comprises a non-thermally conductive filler and/or a non-thermally conductive reinforcing agents in a combined amount in the range of 0 - 50 wt.%, preferably 10- 40 wt.%, relative to the total weight of the composition. Glass fibers are herein considered to be non-thermally conductive reinforcing agents.

Also the other additives may be present in an amount varying over a wide range. Suitable, the thermally conductive polymer composition comprises such another additive in an amount in the range of 0 - 15 wt.%, preferably 0.5 - 10 wt.%, more preferably 1.0 - 5 wt.%, relative to the total weight of the composition.

In a particular embodiment, the polymer composition according to the invention consists of

> a. 20-84.99 wt.% of an organic polymer,
> b. 15 - 60 wt.% of a thermally conductive filler, including 15-40 wt% of boron nitride,
> c. 0.01 - 10 wt.% of carbon black,
> d. 0 - 40 wt.% of a non-thermally conductive filler and/or a non-thermally conductive reinforcing agents,
> e. 0 - 30 wt.% of a flame retardant, and
> f. 0 - 10 wt.% of at least one other additive,

wherein the wt.% are relative to the total weight of the composition.

In a preferred embodiment, the polymer composition according to the invention consists of

> a. 20-84.9 wt.% of an organic polymer,
> b. 15 - 60 wt.% of a thermally conductive filler, including 15-40 wt% of boron nitride,
> c. 0.1 - 7.5 wt.% of carbon black,
> d. 0 - 40 wt.% of a non-thermally conductive filler and/or a non-thermally conductive reinforcing agents,
> e. 0 - 30 wt.% of a flame retardant, and
> f. 0 - 10 wt.% of at least one other additive,

wherein the wt.% are relative to the total weight of the composition.

In a more preferred embodiment, the polymer composition consist of

> a. 20-84 wt.% of an organic polymer,
> b. 15 - 40 wt.% of a boron nitride,
> c. 1 - 7.5 wt.% of carbon black,
> d. 0 - 40 wt.% of a non-thermally conductive inorganic filler and/or non-thermally conductive fibrous reinforcing agent,
> e. 0 - 30 wt.% of a flame retardant, and
> f. 0 -5 wt.% of at least one other additive,

wherein the wt.% are relative to the total weight of the composition.

The thermally conductive polymer composition according to the invention can be made by any process that is suitable for making polymer compositions and includes the conventional processes known by the person skilled in the art of making polymer compositions for heat management applications.

The thermally conductive polymer composition suitable is made by a process wherein the thermally conductive filler and the carbon black are intimately mixed with the polymer matrix to form the thermally conductive composition. If desired, the mixture may contain one or more other additives. The mixture can be prepared using techniques known in the art. Preferably, the ingredients are mixed under low shear conditions in order to avoid damaging the structure of the thermally conductive filler materials. The thermally conductive polymer composition may be produced in any suitable shape, for example, powder, pellets, sheets, film, and the like.

The invention also relates to the use of a polymer composition according to the invention in a process for making a molded part of the polymer composition.

The thermally conductive plastic composition can be processed by any process that is suitable for making moulded plastic parts and includes the conventional processes known by the person skilled in the art of making moulded plastic compositions. The polymer composition can be moulded using melt-extrusion, injection moulding, casting, or other suitable process. Preferably, the moulded part is made by an injection melding process.

An injection-melding process is particularly preferred for compositions comprising thermoplastic polymers. This process generally involves loading pellets of the composition into a hopper. The hopper funnels the pellets into an extruder, wherein the pellets are heated and a molten composition forms. The extruder feeds the molten composition into a chamber containing an injection piston. The piston forces the molten composition into a mould. Typically, the mould contains two moulding sections that are aligned together in such a way that a moulding chamber or cavity is located between the sections. The material remains in the mould under high pressure until it cools.

The invention also relates to a molded part made of a polymer composition according to the invention, or any modification or preferred embodiment thereof. Suitably, the molded part is a heat sink or housing for an electronic component, an electrical device, or an engine.

The invention also relates to the use of a molded part according to the invention for heat management purposes in an assembly comprising a heat source, and to an assembly comprising a molded part according to the invention. An embodiment thereof is an electrical or electronic device comprising an electronic component or an electrical component, an engine or a lighting element, and a heat sink or housing made of the polymer composition according to the invention. More particular, the assembly shall comprise the said heat sink or housing in contact or in close vicinity of the electronic component, electrical component, engine or lighting element. The advantage is not only that the heat sink or housing contributes to a better heat management performance, but also contributes to the efficiency and/or longevity of the electronic component, electrical component, engine or lighting element.

The invention is further illustrated with the following non-limiting examples and comparative experiments.

Preparation of compounds and molded parts

Compounds comprising polyamide 46 polymer (PA46), glass fibers, and optionally boron nitride as thermally conducive filler and/or carbon black, added in the form of a 80 wt.% master batch, were prepared and injection molded using standard compounding and molding conditions for PA46 compounds. The molded part was a housing comprising a main body and some inwardly protruding elements. The compositions and further test results have been collected in Table 1.

Measurement of thermal conductivity

For measurement of $\Lambda_\perp$ and $\Lambda_\parallel$ samples with dimensions of 80 x 80 x 2 mm were prepared from the material to be tested by injection moulding using an injection moulding machine equipped with a square mould with the proper dimensions and a film gate of 80 mm wide and 2 mm high positioned at one side of the square. Of the 2 mm thick injection moulded plaques the thermal diffusivity D, the density (p) and the heat capacity (Cp) were determined. The thermal diffusivity was determined in a direction in-plane and parallel ($D_\parallel$) to the direction of polymer flow upon mould filling, as well as through plane ($D_\perp$), according to ASTM E1461-01 with Netzsch LFA 447 laserflash equipment. The in-plane thermal diffusivity $D_\parallel$ was determined by first cutting small strips or bars with an identical width of about 2 mm wide from the plaques. The length of the bars was in the direction perpendicular to the polymer flow upon mould filling. Several of these bars were stacked with the cut surfaces facing outwards and clamped very tightly together. The thermal diffusivity was measured through the stack from one side of the stack formed by an array of cut surfaces to the other side of the stack with cut surfaces.

The heat capacity (Cp) of the plates was determined by comparison to a reference sample with a known heat capacity (Pyroceram 9606), using the same Netzsch LFA 447 laserflash equipment and employing the procedure also described in ASTM E1461-01. From the thermal diffusivity (D), the density (p) and the heat capacity (Cp), the thermal conductivity of the moulded plaques was determined in a direction parallel ($\Lambda_\parallel$) to the direction of polymer flow upon mould filling, as well as perpendicular to the plane of the plaques ($\Lambda_\perp$), according to formula:

$$\Lambda_x = D_x * \rho * Cp$$

wherein x = $\parallel$ and $\perp$, respectively.

Testing of heat management performance of the molded parts

The housing was tested in combination with a heating element, such that the housing was positioned over the heating element with the inward elements in contact with the heating element. The heating element was switched on and the temperature development of the inward element and the outer part of the body of the housing in contact with air was measured. The measurement was continued for a prolonged time period by keeping the heating element switched on after an equilibrium situation was reached. The temperature of the inward element and the body reached after equilibrium did not change during said prolonged time.

The compositions prepared and tested and test results are reported in Table 1.

Table 1. Example I and comparative experiments A and B

| Experiment | CE-A | CE-B | CE-C | EX-I |
|---|---|---|---|---|
| Composition (wt.%) | | | | |

(continued)

| Experiment | CE-A | CE-B | CE-C | EX-I |
|---|---|---|---|---|
| PA 46 Polymer | 85 | 55 | 81 | 51 |
| Glass Fibres | 15 | 15 | 15 | 15 |
| Boron Nitride | - | 30 | - | 30 |
| Carbon Black Master batch | - | - | 4 | 4 |
| | | | | |
| Thermal conductivity $\Lambda_\perp$ (W/m.K) | 0.3 | 0.7 | 0.3 | 0.7 |
| Electrical resistivity (Ohm) | $> 10^5$ | $> 10^5$ | $> 10^5$ | $> 10^5$ |
| Temperature measurement in heat performance test | | | | |
| Inward elements (I) (°C) | 166 | 143 | - | 125 |
| Outside part of the body (B) (°C) | 103 | 114 | - | 103 |
| Temperature difference $\Delta$(I-B) (°C) | 63 | 29 | - | 22 |
| Average temperature drop versus reference CE-A (°C) | | 6 | - | 20 |

The results show that the addition of the thermally conductive filler has a significant effect on the thermal conductivity of the composition, while the addition of the pigment master batch comprising the carbon black has hardly to no effect on the thermal conductivity.

The results further show that for Comparative Experiment A, without any thermally conductive filler, the inward elements are heated significantly while the temperature rise of the body is rather limited, indicative for the thermal isolation of the polymer composition. Adding of 30 wt.% of thermally conductive filler, as in Comparative Experiment B shows a lower temperature for the inward elements and a higher temperature for the body, indicative for a better heat dissipation from the heating element to the housing, compared with Comparative Experiment A. Addition of only 4 wt.% of the pigment master batch in Example I according to the present invention shows that the temperature of the inward elements has dropped even further while also the temperature of the body has dropped compared to that of Comparative Experiment B.

This effect is surprising in view of absence of any effect on the thermal conductivity from the carbon black, and the low amounts thereof used next to boron nitride in the composition.

**Claims**

1.   Thermally conductive polymer composition comprising

> a. an organic polymer, being a thermoplastic polymer chosen from the group consisting of polyesters, polyamides, polyphenylene sulphides, polyphenylene oxides, polysulfones, polyarylates, polyetheretherketones, and polyetherimides, and mixtures and/or copolymers thereof
> b. 15 - 40 wt.% boron nitride, and
> c. 0.01-10 wt.% of carbon black,

wherein the weight percentages (wt.%) are relative to the total weight of the thermally conductive polymer composition.

2.   Polymer composition according to claim 1, wherein the composition comprises a metallic filler, or an inorganic thermally conductive component other than boron nitride, or a carbonaceous component other than carbon black, or any combination thereof.

3.   Polymer composition according to claim 1 or 2, consisting of

> a. 20-84.99 wt.% of an organic polymer, chosen from the group consisting of polyesters, polyamides, polyphenylene sulphides, polyphenylene oxides, polysulfones, polyarylates, polyetheretherketones, and polyetherimides, and mixtures and/or copolymers thereof
b. 15 - 60 wt.% of a thermally conductive filler, comprising 15 - 40 wt.% boron nitride,
c. 0.01 - 10 wt.% of carbon black,
d. 0 - 40 wt.% of an inorganic filler and/or fibrous reinforcing agent,
e. 0 - 30 wt.% of a flame retardant, and
f. 0 - 10 wt.% of at least one other additive,

wherein the wt.% are relative to the total weight of the composition.

4. Polymer composition according to any of claims 1-3, wherein the polymer composition has a through plane thermal conductivity at 20°C in the range 0.5-2.5 W/m.K. as determined according to the present description.

5. Use of a polymer composition according to any one of claims 1-4 in a process for making a molded part of the polymer composition.

6. Molded part made of a polymer composition according to any one of claims 1-4.

7. Molded part according to claim 6, being a heat sink or housing for an electronic component or an electrical device

8. Use of a molded part according to claim 6 or 7 for heat management purposes in an assembly comprising a heat source.

9. Assembly comprising a molded part according to claim 6 or 7.

10. Assembly according to claim 9, being an electrical device or electronic device, an engine or a lighting system, comprising a heat source and a heat sink or housing made of a polymer composition according to any of claims 1-4 in contact with or in close vicinity to the heat source.


**Patentansprüche**

1. Wärmeleitfähige Polymerzusammensetzung, umfassend

a. ein organisches Polymer, bei dem es sich um ein thermoplastisches Polymer aus der Gruppe bestehend aus Polyestern, Polyamiden, Polyphenylensulfiden, Polyphenylenoxiden, Polysulfonen, Polyarylaten, Polyetheretherketonen und Polyetherimiden und Mischungen und/oder Copolymeren davon handelt,
b. 15-40 Gew.-% Bornitrid und
c. 0,01-10 Gew.-% Ruß,

wobei die Gewichtsprozentanteile (Gew.-%) sich auf das Gesamtgewicht der wärmeleitfähigen Polymerzusammensetzung beziehen.

2. Polymerzusammensetzung nach Anspruch 1, wobei die Zusammensetzung einen metallischen Füllstoff oder eine anorganische wärmeleitfähige Komponente, die von Bornitrid verschieden ist, oder eine kohlenstoffhaltige Komponente, die von Ruß verschieden ist, oder eine Kombination davon umfasst.

3. Polymerzusammensetzung nach Anspruch 1 oder 2, bestehend aus

a. 20-84,99 Gew.-% eines organischen Polymers aus der Gruppe bestehend aus Polyestern, Polyamiden, Polyphenylensulfiden, Polyphenylenoxiden, Polysulfonen, Polyarylaten, Polyetheretherketonen und Polyetherimiden und Mischungen und/oder Copolymeren davon,
b. 15-60 Gew.-% eines wärmeleitfähigen Füllstoffs, der 15-40 Gew.-% Bornitrid umfasst,
c. 0,01-10 Gew.-% Ruß,
d. 0-40 Ges.-% eines anorganischen Füllstoffs und/oder faserförmigen Verstärkungsmittels,
e. 0-30 Gew.-% eines Flammschutzmittels und
f. 0-10 Gew.-% mindestens eines anderen Additivs,

wobei die Gew.-%-Angaben sich auf das Gesamtgewicht der Zusammensetzung beziehen.

**4.** Polymerzusammensetzung nach einem der Ansprüche 1-3, wobei die Polymerzusammensetzung eine gemäß der vorliegenden Beschreibung bestimmte through-plane-Wärmeleitfähigkeit bei 20°C im Bereich von 0,5-2,5 W/m.K aufweist.

**5.** Verwendung einer Polymerzusammensetzung nach einem der Ansprüche 1-4 zur Herstellung eines Formteils aus der Polymerzusammensetzung.

**6.** Formteil aus einer Polymerzusammensetzung nach einem der Ansprüche 1-4.

**7.** Formteil nach Anspruch 6, bei dem es sich um eine Wärmesenke oder ein Gehäuse für ein elektronisches Bauteil oder eine elektrische Vorrichtung handelt.

**8.** Verwendung eines Formteils nach Anspruch 6 oder 7 für Wärmemanagementzwecke in einer Anordnung mit einer Wärmequelle.

**9.** Anordnung mit einem Formteil nach Anspruch 6 oder Anspruch 7.

**10.** Anordnung nach Anspruch 9, bei der es sich um eine elektrische Vorrichtung oder elektronische Vorrichtung, einen Motor oder ein Beleuchtungssystem mit einer Wärmequelle und einer Wärmesenke oder einem Gehäuse aus einer Polymerzusammensetzung nach einem der Ansprüche 1-4, die bzw. das mit der Wärmequelle in Kontakt steht oder sich in unmittelbarer Nähe der Wärmequelle befindet, handelt.

**Revendications**

**1.** Composition polymère thermoconductrice comprenant

a. un polymère organique, étant un polymère thermoplastique choisi dans le groupe constitué par les polyesters, les polyamides, les sulfures de polyphénylène, les oxydes de polyphénylène, les polysulfones, les polyarylates, les polyétheréthercétones et les polyétherimides, et les mélanges et/ou copolymères de ceux-ci,
b. 15-40 % en poids de nitrure de bore, et
c. 0,01-10 % en poids de noir de carbone,

les pourcentages pondéraux (% en poids) se rapportant au poids total de la composition polymère thermoconductrice.

**2.** Composition polymère selon la revendication 1, la composition comprenant une charge métallique, ou un composant thermoconducteur inorganique différent du nitrure de bore, ou un composé carboné différent du noir de carbone, ou toute combinaison de ceux-ci.

**3.** Composition polymère selon la revendication 1 ou 2, composée de

a. 20-84,99 % en poids d'un polymère organique, choisi dans le groupe constitué par les polyesters, les polyamides, les sulfures de polyphénylène, les oxydes de polyphénylène, les polysulfones, les polyarylates, les polyétheréthercétones et les polyétherimides, et les mélanges et/ou copolymères de ceux-ci,
b. 15-60 % en poids d'une charge thermoconductrice, comprenant 15-40 % en poids de nitrure de bore,
c. 0,01-10 % en poids de noir de carbone,
d. 0-40 % en poids d'une charge inorganique et/ou d'un agent de renforcement fibreux,
e. 0-30 % en poids d'un ignifugeant, et
f. 0-10 % en poids d'au moins un autre additif,

les % en poids se rapportant au poids total de la composition.

**4.** Composition polymère selon l'une quelconque des revendications 1 à 3, la composition polymère ayant une conductivité thermique à travers le plan à 20 °C dans la gamme de 0,5-2,5 W/m.K telle que déterminée selon la présente description.

**5.** Utilisation d'une composition polymère selon l'une quelconque des revendications 1 à 4 dans un procédé de fabrication d'une pièce moulée de la composition polymère.

**6.** Pièce moulée constituée d'une composition polymère selon l'une quelconque des revendications 1 à 4.

**7.** Pièce moulée selon la revendication 6, étant un dissipateur thermique ou un boîtier pour un composant électronique ou un dispositif électrique.

**8.** Utilisation d'une pièce moulée selon la revendication 6 ou 7 à des fins de gestion de la chaleur dans un assemblage comprenant une source de chaleur.

**9.** Assemblage comprenant une pièce moulée selon la revendication 6 ou 7.

**10.** Assemblage selon la revendication 9, étant un dispositif électrique ou un dispositif électronique, un moteur ou un système d'éclairage, comprenant une source de chaleur et un dissipateur thermique ou un boîtier constitué d'une composition polymère selon l'une quelconque des revendications 1 à 4 en contact avec ou à proximité étroite de la source de chaleur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008079438 A

- US 20080153959 A